# EUROPÄISCHE PATENTSCHRIFT

(11) **EP 2 258 002 B1**
(45) Veröffentlichungstag und Bekanntmachung des Hinweises auf die Patenterteilung: **19.12.2012**
(21) Anmeldenummer: 09719820.4
(22) Anmeldetag: 11.03.2009
(51) Int. Cl.: H01L 41/04

(54) **VERFAHREN ZUM BETRIEB EINES PIEZOELEMENTS**
METHOD FOR OPERATING A PIEZOELECTRIC ELEMENT
PROCÉDÉ D'UTILISATION D'UN ÉLÉMENT PIÉZOÉLECTRIQUE

(30) Priorität: 11.03.2008 DE 102008013590
(43) Veröffentlichungstag der Anmeldung: 08.12.2010
(73) Patentinhaber: Epcos AG, 81669 München (DE)
(72) Erfinder: RINNER, Franz, A-8530 Deutschlandsberg (AT); LIC, Alenko, A-8530 Deutschlandsberg (AT)
(74) Vertreter: Epping - Hermann - Fischer
(86) Internationale Anmeldenummer: PCT/EP2009/052864
(87) Internationale Veröffentlichungsnummer: WO 2009/112525

(56) Entgegenhaltungen:
- DE-A1-102004 046 080
- DE-B3- 10 250 917

## Beschreibung

Die Erfindung betrifft ein Verfahren zum Betrieb eines Piezoelements.

Aus den Druckschriften DE 60 2004 000 190 T2, DE 10 2004 046080 A1 und DE 102 50 917 B3 sind Verfahren zum Betrieb eines Piezoelements bekannt.

Es ist Aufgabe der vorliegende Erfindung, ein Verfahren anzugeben, mit dem der Hub eines Piezoelements gesteigert werden kann.

Die Aufgabe wird durch ein Verfahren nach Patentanspruch 1 gelöst. Vorteilhafte Ausgestaltungen des Verfahrens sind Gegenstand von Unteransprüchen.

Es wird ein Verfahren zum Betrieb eines Piezoelements angegeben, bei dem eine erste Spannung an dem Piezoelement angelegt wird. Die erste Spannung bewirkt eine erste Auslenkung des Piezoelements. Die Auslenkung des Piezoelements wird gewöhnlich als der Hub eines Piezoelements bezeichnet.

Eine elektrische Entladung des Piezoelements nach dem Anlegen der erste Spannung bewirkt ein erstes Zusammenziehen des Piezoelements. Die Länge, um die sich das Piezoelement hierbei zusammenzieht, wird dabei als eine erste Stauchung bezeichnet. Nach dem ersten Zusammenziehen des Piezoelements wird eine zweite Spannung an dem Piezoelement angelegt. Die zweite Spannung weist eine Polarität auf, die entgegengesetzt zu der Polarität der ersten Spannung gerichtet ist. Die zweite Spannung bewirkt ein weiteres Zusammenziehen des Piezoelements. Das Piezoelement wird dabei um eine zweite Stauchung zusammengezogen.

Nach der elektrischen Entladung der zweiten angelegten Spannung wird wiederholt eine erste Spannung angelegt, die eine Auslenkung des Piezoelements bewirkt. Die Auslenkung des Piezoelements weist hierbei den annähernd gleichen Hub auf, wie bei der zuvor angelegten ersten Spannung.

Nach der ersten elektrischen Entladung der ersten Spannung weist das Piezoelement eine erste Abmessung auf. Nach der elektrischen Entladung der zweiten Spannung weist das Piezoelement eine zweite Abmessung auf, wobei die zweite Abmessung vorzugsweise kleiner ist als die erste Abmessung.

Nach dem zweiten Zusammenziehen durch die angelegte zweite Spannung weist das Piezoelement eine dritte Abmessung auf, die kleiner ist als die erste Abmessung. Die dritte Abmessung des Piezoelement ist vorzugsweise auch kleiner als die zweite Abmessung des Piezoelements.

Nach der elektrischen Entladung der angelegten zweiten Spannung erfährt das Piezoelement eine Ausdehnung um eine Streckung, wobei das Piezoelement anschließend wieder annähernd die zweite Abmessung des Piezoelements aufweist.

Die Differenz zwischen der ersten Abmessung und der zweiten Abmessung ist vorzugsweise gleich der Differenz zwischen der zweiten Stauchung, durch die angelegte zweite Spannung, und der Streckung nach der elektrischen Entladung der angelegten zweiten Spannung.

Durch das Anlegen einer negativen Spannung wird das Piezoelement gestaucht, wobei es nach der elektrischen Entladung der negativen Spannung nicht in seine vorige Länge zurückkehrt, sondern in einem gestauchten Zustand verbleibt. Das Piezoelement weist nach der elektrischen Entladung der zweiten Spannung somit eine geringere Längenabmessung auf, als nach der elektrischen Entladung der ersten Spannung.

Durch diese geringere Längenabmessung des Piezoelements kann der Hub beim nächsten Anlegen der ersten Spannung gesteigert werden. Die Steigerung des Hubs entspricht annähernd der Differenz zwischen der zweiten Stauchung beim Anlegen der zweiten Spannung und der anschließenden Streckung bei der elektrischen Entladung der zweiten Spannung.

Nach der elektrischen Entladung der zweiten Spannung weist das Piezoelement wieder die zweite Abmessung auf. Durch wiederholtes Anlegen der ersten Spannung dehnt sich das Piezoelement um die erste Auslenkung.

In einer bevorzugten Ausführungsform wird die zweite Spannung unmittelbar nach dem ersten Zusammenziehen des Piezoelements angelegt. Es ist jedoch auch möglich, dass die zweite Spannung nahezu beliebig irgendwann zwischen zwei ersten Spannungen angelegt werden kann.

Die maximale Dauer zwischen der elektrischen Entladung der ersten Spannung und dem Anlegen der zweiten Spannung ist vorzugsweise gleich der Dauer der Differenz zwischen zwei ersten Spannungen und der Dauer der zweiten Spannung.

Die zweite Abmessung wird beim wiederholten Anlegen der zweiten Spannung vorzugsweise mit einer Toleranz von ±5 % erreicht.

Die erste Spannung wird vorzugsweise für eine Dauer von cirka 0,5 bis 2,0 ms an dem Piezoelement angelegt.

Vorzugsweise weist die erste Spannung einen maximalen Wert zwischen 100 und 200 Volt auf.

Die Werte wiederholt angelegter erster Spannungen weichen vorzugsweise höchstens um 5 % voneinander ab.

Vorzugsweise ist die Dauer der ersten Spannung länger als die Dauer der zweiten Spannung, die an dem Piezoelement angelegt wird.

Vorzugsweise weist die zweite Spannung einen kleineren absoluten maximalen Wert auf als die erste Spannung.

Die zweite Spannung weist vorzugsweise eine Größe zwischen -5 und -75 Volt auf.

Das Piezoelement wird beim Anlegen der ersten Spannung und beim Anlegen der zweiten Spannung jeweils mit einem Stromimpuls beaufschlagt.

Vorzugsweise ist der die erste Spannung begleitende Stromimpuls positiv und beträgt maximal 20 Ampere.

Die Dauer des die erste Spannung begleitenden Stromimpuls beträgt ungefähr 0,1 bis 0,5 ms. In einer bevorzugten Ausführungsform beträgt die Dauer des die erste Spannung begleitenden Stromimpuls 0,25 bis 0,3 ms.

Der die zweite Spannung begleitende Stromimpuls ist vorzugsweise negativ und beträgt maximal -15 Ampere.

Die Dauer des die zweite Spannung begleitenden Stromimpuls beträgt ungefähr 0,01 bis 0,2 ms. In einer bevorzugten Ausführungsform beträgt die Dauer des die zweite Spannung begleitenden Stromimpuls 20 bis 100 µs. Erfindungsgemäβ beträgt die Dauer 0,01 bis 0,1 ms.

Vorzugsweise ist die Dauer des die zweite Spannung begleitenden Stromimpulses kürzer, als die Dauer des die erste Spannung begleitenden Stromimpulses.

In einer Ausführungsform liegt der Hub vorzugsweise in einem Bereich zwischen 40 und 50 µm. In einer weiteren Ausführungsform ist jedoch auch möglich, dass der Hub bis zu 80 µm aufweist.

In einer bevorzugten Ausführungsform wird das Piezoelement in einer Anwendung verwendet, bei dem das Piezoelement mit beispielsweise einer Frequenz von 50 Hz oszilliert. Solche Anwendungen finden sich beispielsweise bei Einspritzdüsen im Kfz-Bereich.

Das verwendete Piezoelement umfasst vorzugsweise einen Stapel von übereinander angeordneten piezokeramischen Schichten und Elektrodenschichten.

Das oben beschriebene Verfahren wird anhand der folgenden Figuren und Ausführungsbeispielen näher erläutert.

Die nachfolgend beschriebenen Zeichnungen sind nicht als maßstabsgetreu aufzufassen. Vielmehr können zur besseren Darstellung einzelne Dimensionen vergrößert, verkleinert oder auch verzerrt dargestellt sein. Elemente die einander gleichen oder die die gleichen Funktionen übernehmen sind mit den gleichen Bezugszeichen bezeichnet.
- Figur 1: zeigt ein schematisches Diagramm bei dem die Länge L eines Piezoelements über die Zeit T dargestellt ist,
- Figur 2: zeigt ein gemessenes Diagramm gemäß Figur 1, bei dem die Längenänderung eines Piezoelements über die Zeit T dargestellt ist, wobei nach der ersten Spannung jeweils keine zweite Spannung, eine zweite Spannung mit -20 Volt bzw. mit -40 Volt nachgeschaltet wurde,
- Figur 3: zeigt das zur Figur 2 dazugehörige Diagramm, bei dem die Spannung U über die Zeit T dargstellt ist,
- Figur 4: zeigt das zur Figur 2 und Figur 3 dazugehörige Diagramm, bei dem die Stromstärke I über die Zeit T dargstellt ist,
- Figur 5: zeigt einen schematischen Aufbau eines Piezoaktors.

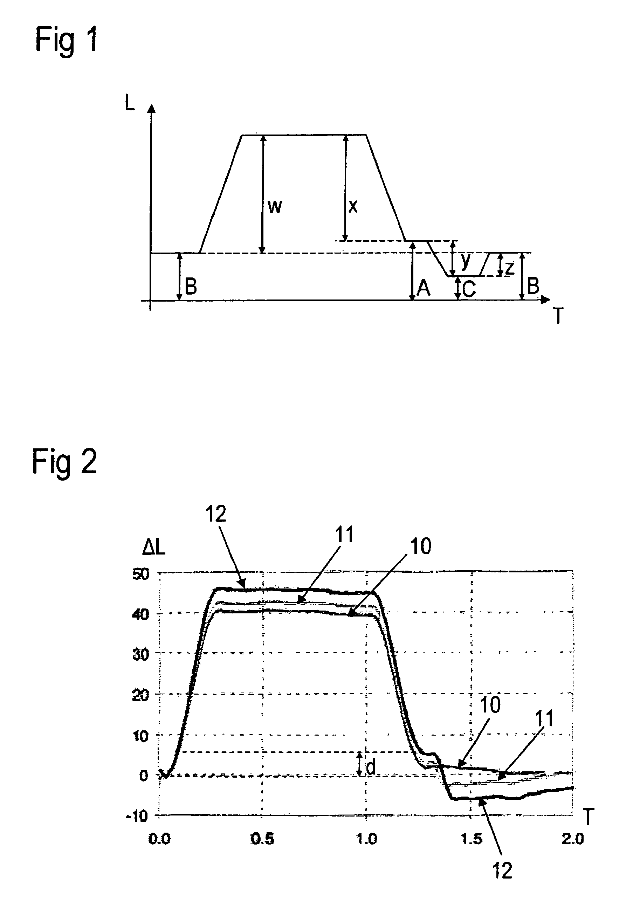

In Figur 1 ist ein Ausdehnungsdiagramm des Piezoelements über einen Zeitabschnitt dargestellt. Die x-Achse gibt schematisch die Zeit T an. Die y-Achse gibt schematisch die Ausdehnung L des Piezoelements an. Zu Beginn des Diagramms weist das Piezoelement eine Länge B auf, die als zweite Abmessung bezeichnet wird. Durch Anlegen einer ersten Spannung dehnt sich das Piezoelement um eine Strecke w aus. Diese Strecke w wird als der Hub des Piezoelements bezeichnet. Solange die erste Spannung an dem Piezoelement anliegt, bleibt das Piezoelement gestreckt. Nach der elektrischen Entladung der ersten Spannung zieht sich das Piezoelement um eine Strecke x zusammen. Das Piezoelement weist nun eine erste Längenabmessung A auf. Diese Abmessung A ist größer, als die zweite Abmessung B vor dem Anlegen der ersten Spannung. Nach der elektrischen Entladung der ersten Spannung wird an dem Piezoelement eine zweite Spannung angelegt. Die zweite Spannung weist eine Polarität auf, die entgegengesetzt zur ersten Spannung ist. Durch das Anlegen der zweiten, negativen Spannung zieht sich das Piezoelement um eine Strecke y weiter zusammen. Durch das weitere Zusammenziehen weist das Piezoelement nun eine dritte Längenabmessung C auf. Diese dritte Abmessung C ist kleiner als die erste Abmessung A und ebenso kleiner als die zweite Abmessung B. Nach der elektrischen Entladung der zweiten Spannung streckt sich das Piezoelement um eine Strecke z. Nach der Streckung um die Strecke z weist das Piezoelement vorzugsweise wieder die zweite Abmessung B auf.

Die Abmessungen A, B und C des Piezoaktors sind in den Figuren 1 und 2 verkürzt dargestellt. Das Verhältnis zwischen den Längenänderungen w, x, y, und z ist im Vergleich zu den Abmessungen A, B und C vergrößert dargestellt.

Die Differenz zwischen der ersten Abmessung A und der zweiten Abmessung B ist vorzugsweise annähernd gleich der Differenz zwischen der Strecke y, um die sich das Piezoelement beim Anlegen der zweiten Spannung staucht und der Länge z, um die sich das Piezoelement bei der elektrischen Entladung der zweiten Spannung streckt. Um diese Differenz wird der Hub des Piezoelements annähernd gesteigert.

Durch das Anlegen der zweiten Spannung, die zu der ersten Spannung vorzugsweise eine entgegen gesetzte Polarität aufweist, wird eine Hubsteigerung des Piezoelements erreicht. Ohne der zweiten Spannung würde das Piezoelement nur einen Hub aufweisen, der annähernd einer Längenänderung um die Strecke x entspricht, um die sich das Piezoelement bei der elektrischen Entladung der ersten Spannung zusammenzieht.

Das Anlegen der zweiten Spannung erfolgt zwischen zwei ersten Spannungen. Vorzugsweise wird das Piezoelement derart betrieben, dass das Piezoelement mit einer bestimmten Frequenz, beispielsweise 50 Hz, oszilliert. Dazu wird beispielsweise alle 20 ms eine erste Spannung angelegt, bei der sich das Piezoelement in seiner Länge ausdehnt. Das Anlegen der zweiten Spannung erfolgt zwischen zwei ersten Spannungen, wobei der Abstand zwischen der elektrischen Entladung der ersten Spannung und dem Anlegen der zweiten Spannung maximal der Differenz zwischen der Dauer zwischen zwei ersten Spannungen 1 und der Länge der zweiten Spannung ist.

Die Figur 2 zeigt den Verlauf der Längenänderung des Piezoelements über eine Zeit T. Dabei stellt die x-Achse des Diagramms den zeitlichen Verlauf in ms (Millisekunden) dar. Auf der y-Achse ist die Längenänderung ΔL des Piezoaktors in µm (Mikrometer) aufgetragen. In dem Diagramm sind drei Messungen dargstellt, die durch drei Linien 10, 11, 12 dargestellt sind.

Der Verlauf, der durch die Linie 10 dargestellt ist, zeigt den Verlauf der Längenänderung eines Piezoelements bei dem eine erste Spannung angelegt wurde. Das Piezoelement dehnt sich beim Anlegen der ersten Spannung um ca. 40 µm aus. Nach der elektrischen Entladung der ersten Spannung zieht sich das Piezoelement nach ca. 1,0 ms wieder auf seine Ausgangslänge zurück. Bei diesem Versuch wurde nach der ersten Spannung keine weitere zweite Spannung angelegt. Die Ausdehnung des Piezoelements verbleibt bis zur nächsten ersten Spannung in der gleichen Länge.

Mit dem Verlauf der Linie 11 ist die Längenänderung eines Piezoelements dargestellt, bei dem nach der elektrischen Entladung der ersten Spannung eine zweite, negative Spannung nachgeschaltet wurde. Die zweite Spannung weist für den Versuch, der durch die Linie 11 dargestellt ist, eine Spannung von -20 Volt auf. Nach der Ausdehnung auf ca. 43 µm über ca. 1,0 ms zieht sich das Piezoelement nach der elektrischen Entladung der ersten Spannung auf eine erste Abmessung zurück, die um die Differenz d größer ist als die zweite Abmessung zu Beginn der Messung. Anschließend wird die zweite, negative Spannung von -20 Volt an dem Piezoelement angelegt. Durch die zweite Spannung zieht sich das Piezoelement weiter zusammen. Die Stauchung beträgt hierbei ca. 6 µm. Nach der elektrischen Entladung der zweiten Spannung dehnt sich das Piezoelement wieder auf die zweite Abmessung aus. Die zweite Abmessung weist vorzugsweise eine um die Differenz d kleinere Länge als die erste Abmessung auf.

In dem in Figur 2 dargestellten dritten Versuch, der durch die Linie 12 skizziert ist, wird nach der ersten Spannung eine zweite, negative Spannung angelegt. Die zweite Spannung weist einen Wert von -40 Volt auf. Im Vergleich zum Verlauf der Linie 11, weist das Piezoelement dadurch einengrößeren Hub beim Anlegen der ersten Spannung auf. Die maximale Ausdehnung beträgt hierbei ca. 46 µm. Die Stauchung beim Anlegen der zweiten, negativen Spannung beträgt ca. 10 µm.

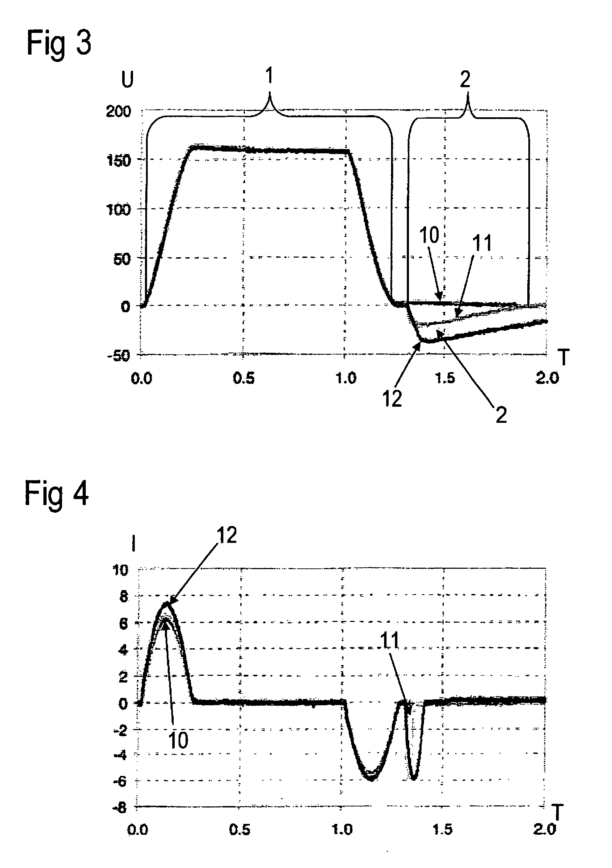

Das zur Figur 2 analoge Spannungs-Zeit-Diagramm und Strom-Zeit-Diagramm ist in den Figuren 3 und 4 dargestellt.

In Figur 3 ist ein Diagramm dargestellt, das den Verlauf der Spannung gemäß dem in Figur 2 dargestellten Verlaufs der Längenänderung eines Piezoelements über die Zeit T zeigt. Auf der x-Achse ist die Zeit T in ms aufgetragen, auf der y-Achse, die Spannung U in Volt. Nach dem Anlegen einer ersten Spannung 1 an einem Piezoelement wird in einem ersten Versuch (Linie 10) keine weiter zweite Spannung 2 nachgeschaltet. Bei einem zweiten (Linie 11) und dritten Versuch (Linie 12) wird nach der ersten Spannung 1 eine zweite, negative Spannung 2 von -20 Volt (Linie 11) beziehungsweise -40 Volt (Linie 12) angelegt. Das Maximum der erste Spannung 1 beträgt bei allen drei Versuchen (10, 11 , 12) ca. 160 Volt.

Die Steigerung des Hubs des Piezoelements erfolgt hierbei ohne eine Erhöhung der anzulegenden ersten Spannung 1. Bei gleicher angelegter erster Spannung 1 kann der Hub des Piezoelements durch Zwischenschalten einer zweiten, negativen Spannung 2, erhöht werden.

Die zweite Spannung 2 kann wie in Figur 3 dargestellt, unmittelbar nach der ersten Spannung 1 angelegt werden. Es ist jedoch auch möglich, dass zwischen der ersten Spannung 1 und der zweiten Spannung 2 ein größerer Zeitraum liegt. Der maximaler Abstand zwischen der ersten 1 und der zweiten Spannung 2 ist die Differenz zwischen dem zeitlichen Abstand zweier aufeinander folgender erster Spannungen 1 und der Dauer der zweiten Spannung 2.

Die Figur 4 zeigt ein Diagramm, bei dem der Stromverlauf über die Zeit T gemäß den Figuren 2 und 3 dargestellt ist. Die x-Achse zeigt den zeitlichen Verlauf in ms, auf der y-Achse ist die Stromstärke I in Ampere aufgetragen. Beim Anlegen einer ersten Spannung 1 steigt der Stromverbrauch für ca. 0.3 ms auf maximal 8 Ampere (Linie 12) bzw. 6 Ampere (Linie 10) an. Nach der elektrischen Entladung der ersten Spannung 1 nach ca. 1.0 ms fließt ein Strom von ca. -6 Ampere an. Beim Anlegen der negativen, zweiten Spannung fließt über ca. 0.05 ms (Linie 11) bzw. 0.1 ms (Linie 12) ein Strom von ca. -6 Ampere an.

Durch die Steigerung des Hubs des Piezoelements steigt der Stromverbrauch an.

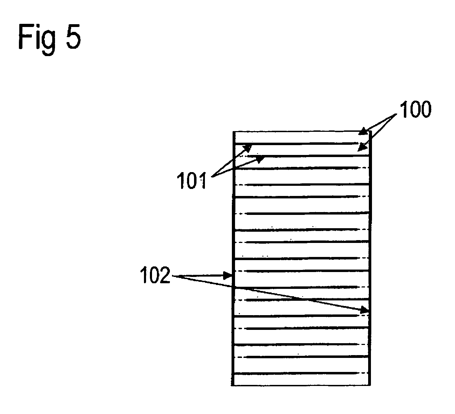

In Figur 5 ist eine schematische Skizze eines Piezoaktors dargestellt. Das Piezoelement weist keramische Schichten 100 auf. Die keramische Schichten 100 weisen Elektrodenschichten 101 auf, wobei die Elektrodenschichten 101 abwechselnd über eine erste beziehungsweise eine zweite Außenelektrode 102 nach außen kontaktiert sind. Durch Anlegen einer Spannung an die Außenelektroden 102 des Piezoelements zieht sich das Piezoelement in der Länge zusammen beziehungsweise dehnt sich in der Länge aus. Die Differenz zwischen der ursprünglichen Länge des Piezoelements und der Länge im gestreckten Zustand, wird als Hub des Piezoelements bezeichnet.

Bei dem in den Figuren 2 bis 4 verwendeten Piezoaktor handelt es sich um einen Piezoaktor des Typs PPD, der bei einer Frequenz von 50 Hz freilaufend mit einer Rohrfeder betrieben wurde. Das beschriebene Verfahren zum Betrieb eines Piezoelements ist jedoch auch für beliebig andere Typen von Piezoaktoren und anderen nahezu beliebigen Frequenzen geeignet.

Obwohl in den Ausführungsbeispielen nur eine beschränkte Anzahl möglicher Weiterbildung der Erfindung beschrieben werden konnte ist die Erfindung nicht auf diese beschränkt. Es ist prinzipiell möglich, dass das Piezoelement mit nahezu jeder beliebigen Frequenz betrieben wird, bzw. dass die zweite Spannung einen größeren negativen Wert aufweist.

Die Erfindung ist nicht auf die Anzahl der dargestellten Elemente beschränkt.

### Bezugszeichenliste

- A: erste Abmessung des Piezoelements
- B: zweite Abmessung des Piezoelements
- C: dritte Abmessung des Piezoelements
- w: Hub
- x: erste Stauchung
- y: zweite Stauchung
- z: Streckung
- d: Differenz zwischen erster Abmessung A und zweiter Abmessung B
- 1: erste Spannung
- 2: zweite Spannung
- 10: Linie zum ersten Versuch (ohne zweiter Spannung 2)
- 11: Linie zum zweiten Versuch (mit zweiter Spannung 2 von -20 Volt)
- 12: Linie zum dritten Versuch (mit zweiter Spannung 2 von -40 Volt)
- 100: keramische Schichten
- 101: Elektrodenschichten
- 102: Außenelektroden

## Patentansprüche

1. Verfahren zum Betrieb eines Piezoelements, bei dem
- eine erste Spannung (1) an das Piezoelement angelegt wird, welche eine erste Auslenkung des Piezoelements mit einem Hub (w) bewirkt, und
- eine elektrische Entladung des Piezoelements nach dem Anlegen der ersten Spannung ein erstes Zusammenziehen des Piezoelements um eine erste Stauchung (x) bewirkt,
- wobei nach dem ersten Zusammenziehen eine zweite Spannung (2) an das Piezoelement angelegt wird, die eine gegenüber der ersten Spannung (1) entgegengesetzte Polarität aufweist und ein weiteres Zusammenziehen des Piezoelements um eine zweite Stauchung (y) bewirkt,
- wobei ein wiederholtes Anlegen der ersten Spannung (1) nach der elektrischen Entladung der angelegten zweiten Spannung (2) eine Auslenkung des Piezoelements mit dem gleichen Hub (w) bewirkt und
- beim Anlegen der ersten Spannung (1) und beim Anlegen der zweiten Spannung (2) das Piezoelement jeweils mit einem Stromimpuls beaufschlagt wird, **dadurch gekennzeichnet, dass**
- der die erste Spannung (1) begleitende Stromimpuls eine Dauer von 0,2 bis 0,5 ms aufweist und
- der die zweite Spannung (2) begleitende Stromimpuls eine Dauer von 0,01 bis 0,1 ms aufweist.

2. Verfahren nach Anspruch 1, bei dem
der die erste Spannung (1) begleitende Stromimpuls positiv ist und maximal 20 A beträgt.

3. Verfahren nach einem der Ansprüche 1 oder 2, bei dem der die zweite Spannung (2) begleitende Stromimpuls negativ ist und maximal -15 A beträgt.

## Claims

1. Method for operating a piezoelectric element, in which
- a first voltage (1) is applied to the piezoelectric element and produces a first deflection of the piezoelectric element with a travel (w), and
- an electrical discharge of the piezoelectric element after the application of the first voltage results in a first contraction of the piezoelectric element by a first compression (x),
- wherein, after the first contraction, a second voltage (2) is applied to the piezoelectric element, whose polarity is opposite that of the first voltage (1) and which causes a further contraction of the piezoelectric element by a second compression (y),
- wherein repeated application of the first voltage (1) after the electrical discharge of the applied second voltage (2) results in a deflection of the piezoelectric element with the same travel (w), and
- a current pulse is in each case applied to the piezoelectric element when the first voltage (1) is applied and when the second voltage (2) is applied, **characterized in that**
- the current pulse which accompanies the first voltage (1) has a duration of 0.2 to 0.5 ms, and
- the current pulse which accompanies the second voltage (2) has a duration of 0.01 to 0.1 ms.

2. Method according to Claim 1, in which the current pulse which accompanies the first voltage (1) is positive and is a maximum of 20 A.

3. Method according to either of Claims 1 and 2, in which the current pulse which accompanies the second voltage (2) is negative and is a maximum of -15 A.

## Revendications

1. Procédé d'utilisation d'un élément piézoélectrique, dans lequel:
une première tension (1) est appliquée au niveau de l'élément piézoélectrique, ladite tension provoquant une première déviation de l'élément piézoélectrique avec une course (w); et
une décharge électrique de l'élément piézoélectrique après application de la première tension provoque une première contraction de l'élément piézoélectrique autour d'un premier poinçon (x);
une deuxième tension (2) est appliquée au niveau de l'élément piézoélectrique après la première contraction, ladite tension présentant une polarité opposée par rapport à la première tension (1) et provoquant une contraction supplémentaire de l'élément piézoélectrique autour d'un deuxième poinçon (y);
une application répétée de la première tension (1) après la décharge électrique de la deuxième tension (2) appliquée provoquant une déviation de l'élément piézoélectrique avec la même course (w); et
l'élément piézoélectrique étant respectivement sollicité avec une impulsion de courant lors de l'application de la première tension (1) et lors de l'application de la deuxième tension (2) ;
**caractérisé en ce que**:
l'impulsion de courant accompagnant la première tension (1) présente une durée allant de 0,2 à 0,5 ms; et
l'impulsion de courant accompagnant la deuxième tension (2) présente une durée allant de 0,01 à 0,1 ms.

2. Procédé selon la revendication 1, dans lequel l'impulsion de courant accompagnant la première tension (1) est positive et s'élève à maximum 20 A.

3. Procédé selon l'une quelconque des revendications 1 ou 2, dans lequel l'impulsion de courant accompagnant la deuxième tension (2) est négative et s'élève à maximum -15 A.
